# EUROPEAN PATENT SPECIFICATION

(11) **EP 3 588 841 B1**
(45) Date of publication and mention of the grant of the patent: **12.11.2025**
(21) Application number: 18179235.9
(22) Date of filing: 22.06.2018
(51) Int. Cl.: H04L 9/32

(54) **METHOD AND DEVICE FOR EXECUTING AN AUTHENTICATION SCHEME**
VERFAHREN UND VORRICHTUNG ZUR AUSFÜHRUNG EINES AUTHENTIFIZIERUNGSSCHEMAS
PROCÉDÉ ET DISPOSITIF D'EXÉCUTION D'UN SCHÉMA D'AUTHENTIFICATION

(43) Date of publication of application: 01.01.2020
(73) Proprietor: QuBalt GmbH, 24534 Neumünster (DE)
(72) Inventor: HARDER, Wulf, 24534 Neumünster (DE)
(74) Representative: HKW Intellectual Property PartG mbB

(56) References cited:
- EP-A1- 2 107 711
- US-A1- 2014 245 020
- US-A1- 2017 078 101
- WEGMAN M N ET AL: "NEW HASH FUNCTIONS AND THEIR USE IN AUTHENTICATION AND SET EQUALITY", JOURNAL OF COMPUTER AND SYSTEM SCIEN, ACADEMIC PRESS, INC., LONDON, GB, vol. 3, no. 22, 1 June 1981 (1981-06-01), pages 265 - 279, XP008003418, ISSN: 0022-0000, DOI: 10.1016/0022-0000(81)90033-7
- CARTER J L ET AL: "UNIVERSAL CLASSES OF HASH FUNCTIONS", JOURNAL OF COMPUTER AND SYSTEM SCIENCES, ACADEMIC PRESS, INC., LONDON, GB, vol. 18, 1 January 1979 (1979-01-01), pages 143 - 154, XP000652858, ISSN: 0022-0000, DOI: 10.1016/0022-0000(79)90044-8
- "Chapter 13: Key Management Techniques ED - Menezes A J; Van Oorschot P C; Vanstone S A", 1 October 1996 (1996-10-01), XP001525013, ISBN: 978-0-8493-8523-0, Retrieved from the Internet <URL:http://www.cacr.math.uwaterloo.ca/hac/>

## Description

### FIELD OF THE INVENTION

The present invention relates to a method, to a computer program and to a device for executing an authentication scheme with a sender entity and a receiver entity. Moreover, the present invention relates to a system including a sender entity and a receiver entity for executing an authentication scheme.

### BACKGROUND

When a message is sent from a sender entity to a receiver entity, an adversary may intercept the message and falsify it or corrupt it. In order to detect such a corruption, the sender entity may also send a digital signature for authentication to the receiver entity. Such methods for authentication are described in public cryptography standards. The receiver entity may then verify that the digital signature belongs to the message. If this is not the case, the receiver entity notes that the received message has been corrupted. It is believed that the cryptographic algorithms used to calculate the digital signature are based on hard mathematical problems and an adversary cannot generate the valid digital signature to a certain message without having the key.

However, there is no evidence for the security of such public cryptographic standards. In particular for safety-critical systems, their use may include great risks. An adversary may possibly use cryptanalysis or quantum computers to break such public cryptographic standards without becoming public knowledge.

These risks may be avoided by using an information-theoretically secure authentication procedure. There is an information-theoretically secure procedure by Carter and Wegman from 1981 (see reference [1]). It is mathematically proven secure against any type of attacks, including attacks based on cryptanalysis and quantum computers. Therefore, the authentication procedure is also used for data being transmitted via quantum communication channels, which provide a perfect secrecy for the data.

In this procedure by Carter and Wegman, trees of smaller hash functions are used, wherein the outputs of said smaller hash functions are used as inputs for one of the further smaller hash functions. Parts or message parts of the message to be authenticated are input in pairs into said smaller hash functions. The hash values are then processed in pairs in an analogue manner, by further smaller hash functions of said tree, until only one hash value remains at the end of processing said tree.

In this method, a secret or a key that is owned by both, the sender entity and the receiver entity of the message, is also used as input into the tree of smaller hash functions.

A problem may arise that the amount of data to be authenticated at a certain level in the tree does not always have an even number. Therefore, zeros or blanks are then introduced in order to arrive at an even number in each level of the tree.

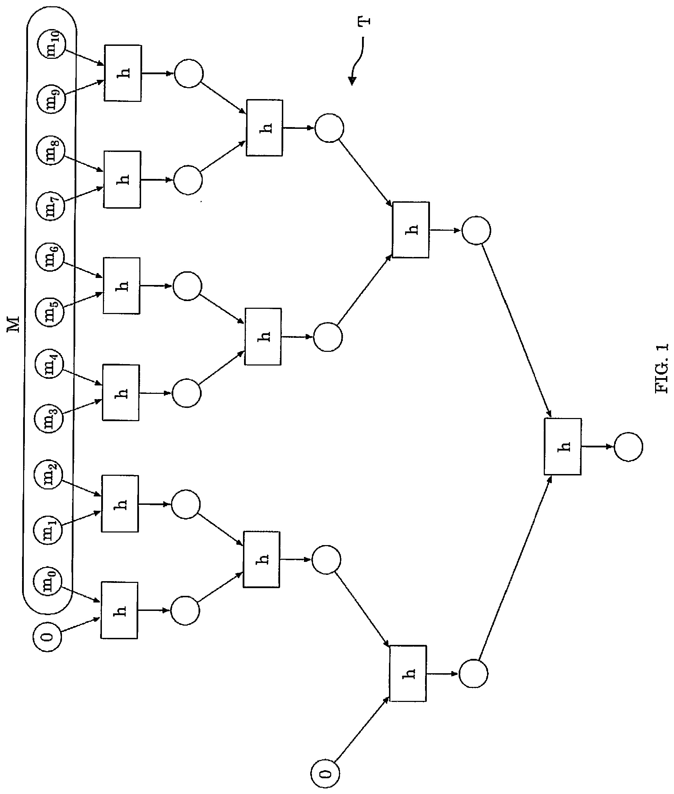

In this regard, Fig. 1 depicts an example for a tree T of first hash functions h representing a hash function family of second hash functions for authenticating a message M. The first hash functions h shown in Fig. 1 are identical to each other. The message M includes a plurality of message parts m₀ - m₁₀. The message M having said plurality of message parts m₀ - m₁₀ is authenticated using the tree T of hash functions h. The hash functions h may use a secret or a key for forming a particular one of the second hash functions of the hash function family. In other words, the particular one of the second hash functions is selected by said certain key. As shown in Fig. 1, into the left hash function h of the top level of the tree T, a zero 0 and the first message part m₀ are input. Furthermore, in the last but one level of the tree T, a further zero is input into the left hash function h.

Because of inserting the zeros into the tree T of Fig. 1, computing time is wasted.

Therefore, the computing speed for executing the authentication scheme is not optimal. In particular, the percentual loss of computing time is particularly high for short messages, for example used for controlling safety-critical systems. Another disadvantage of the known authentication schemes is that for large messages to be authenticated, the data of a tree must either be located in the local memory of the authenticating device, i.e. the sender entity and/or the receiver entity, or the data must be transported several times in and out of the memory in a larger memory when the memory of the authentication device is too small for the entire dataset. This in turn results in speed penalties when executing the authentication scheme. If a multiple transport of data has to be avoided, the local memory must be large enough. This may restrict the choice of the authentication device. For example, if the authentication device is a smartcard and the message to be authenticated is several gigabytes in size, this may pose a problem.

Accordingly, it is an aspect of the present invention to improve the execution of an authentication scheme with a sender entity and a receiver entity.

### BRIEF SUMMARY OF THE INVENTION

According to a first aspect, a method for executing an authentication scheme with a sender entity and a receiver entity in accordance with claim 1 is proposed.

The tree has at least one first hash function that receives as inputs one of the message parts and an output of one of the other first hash functions of the tree.

Because, in at least one of the first hash functions, one of the message parts and one output of one the other first hash functions are input, it is possible that the amount of data to be authenticated at each level in the tree can always have an even number, assumed that the counting of levels starts at the root of the tree. Therefore, no zeros and no blanks have to be introduced in order to arrive at an even number in each level of the tree.

The percentual gain in computing time is particularly high for short messages which may be used for controlling safety-critical systems. In other words, the technical effect of the present method is an increase in processing speed when executing said authentication scheme.

The tree comprises N first hash functions and M levels, wherein the lowest of said M levels corresponds to a root of the tree. One of the N first hash functions is allocated to said root, and the other N-1 first hash functions are allocated to the other M-1 higher levels of the tree.

The provided hash value may be part of authentication data for authenticating the sender entity to the receiver entity.

In particular, the output of the very last first hash function in the tree corresponds to the output of the tree. Therefore, this output of the very last first hash function represents the hash value which may be part of said authentication data.

The first hash functions use a secret for forming a certain one of the second hash functions of the hash function family. The secret may be embodied by a key that the sender entity and the receiver entity share.

Thus, a particular one of the second hash functions may be selected by said certain secret. In dependence on said certain secret, the first hash functions of the tree constitute said certain one of the second hash functions of the hash function family.

The secret is provided to the sender entity and the receiver entity in advance. In particular, the term "in advance" means a time before the execution of the authentication scheme begins.

Moreover, information for forming the tree may be provided to the sender entity and the receiver entity.

A tree part including at least two first hash functions of the tree is completely calculated before other tree parts of the tree are calculated. If a first tree part is completely calculated before calculating other parallel tree parts, the entries in the first tree part are no longer needed. They no longer have to be loaded or saved. Instead, only the result of the first tree part needs to be saved, resulting in less memory consumption. A tree part may also be referenced to as subtree.

The first hash functions of the tree are calculated in a certain order, said certain order being defined by a recursive algorithm beginning at the root of the tree.

The authentication scheme is information-theoretically secure. In particular, the authentication scheme is information-theoretically secure if its security derives only from information theory. It cannot be broken even when an adversary has unlimited computing power, because the adversary does not have enough information to break the secure authentication scheme. Thus, the authentication scheme is also secure against quantum adversaries.

In a further embodiment, the authentication scheme is the authentication scheme of Carter and Wegman (see references [1] and [2]). The authentication scheme of Carter and Wegman is advantageously information-theoretically secure. The security of the authentication scheme of Carter and Wegman for settings in which the authentication key is partially known by the adversary is studied in reference [3].

The second hash functions of the hash function family are universal hash functions.

In a further embodiment, the provided hash value may be encrypted by one-time pad, wherein the encrypted hash value is transferred from the sender entity to the receiver entity.

In a further embodiment, the message includes a software, in particular transmitted or to be transmitted from the sender entity to the receiver entity. The software transmitted from the sender entity to the receiver entity may be encrypted or may be unencrypted. Alternatively or additionally, said software may be transformed with white-box cryptography methods.

In a further embodiment, the receiver entity is a tamper resistant hardware. The tamper resistant hardware may be a hardware security module or a smartcard or a secured area in a processor. In particular, the secure hardware is a tamper-resistant storage device which is configured to protect against manipulation and stealing of the authentication key. Protection against manipulation prevents adversaries from manipulating an authentication key and subsequent transferring a malicious message like for instance a malicious software. Furthermore, the authentication keys are kept secret. Alternatively, or additionally, the authentication keys may be distributed in a secure way. For example, the authentication keys may be stored in a secure, tamper-resistant chip, in a smart-card, in a tamper-resistant SIM card, or in a hardware security module. In particular, SIM cards and SIM card readers may be used to install secrets or authentication keys in the receiver entity in a secure way anytime.

In a further embodiment, the sender entity is a tamper resistant hardware.

In particular, the authentication key is stored in tamper-resistant storage which is configured to protect against manipulation and stealing of the authentication key. Furthermore, the authentication keys are kept secret.

In a further embodiment, the secret or authentication key is protected using white-box cryptography. White-box cryptography is an approach to designing and implementing cryptographic algorithms in such a way that their program code, internal data, and keys are protected against attacks like debugging, reverse-engineering and key retrieval (see reference [4]).

In a further embodiment, the secret or authentication key is protected using fully homomorphic encryption.

Any embodiment of the first aspect may be combined with any embodiment of the first aspect to obtain another embodiment of the first aspect.

According to a second aspect, the invention relates to a computer program in accordance with claim 5, comprising a program code for executing the method of the first aspect or of an embodiment of the first aspect for executing an authentication scheme with a sender entity and a receiver entity when run on at least one computer.

According to a third aspect, a system including a sender entity and a receiver entity for executing an authentication scheme in accordance with claim 6 is proposed.

Any embodiment of the first aspect may be combined with the above third aspect to obtain a further embodiment of the third aspect.

According to a fourth aspect, a device for authentication of a message having a plurality of message parts in accordance with claim 7 is proposed.

Any embodiment of the first aspect may be combined with the above fourth aspect to obtain a further embodiment of the fourth aspect.

In the following, exemplary embodiments of the present invention are described with reference to the enclosed figures.

### BRIEF DESCRIPTION OF THE DRAWINGS

Fig. 1 shows an example for a tree of first hash functions representing a hash function family of second hash functions for authenticating a message;
Fig. 2 shows an embodiment of a sequence of method steps for executing an authentication scheme with a sender entity and a receiver entity;
Fig. 3 shows an embodiment of a tree of first hash functions representing a hash function family of second hash functions for authenticating a message;
Fig. 4 shows the embodiment of the tree of Fig. 3 illustrating different tree parts in the tree;
Fig. 5 shows an embodiment of a system including a sender entity and a receiver entity for executing an authentication scheme; and
Fig. 6 shows an embodiment of a device for authentication of a message.

Similar or functionally similar elements in the figures have been allocated the same reference signs if not otherwise indicated.

### DETAILED DESCRIPTION OF THE EMBODIMENTS

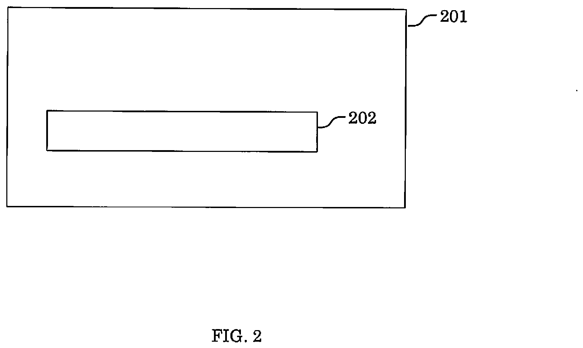

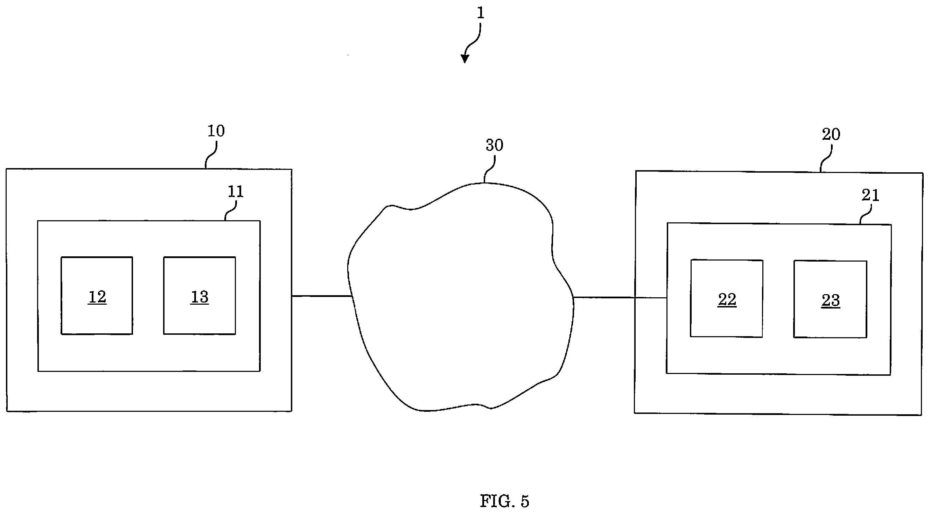

In Fig. 2, an embodiment of a sequence of method steps for executing an authentication scheme with a sender entity 10 and a receiver entity 20 (see Fig. 5) is depicted. Examples for the sender entity 10 and the receiver entity 20 are shown in Fig. 5. For example, the receiver entity 20 is a tamper-resistant hardware. The tamper-resistant hardware may be a hardware security module (HSM) or a smartcard or a secured area of a processor.

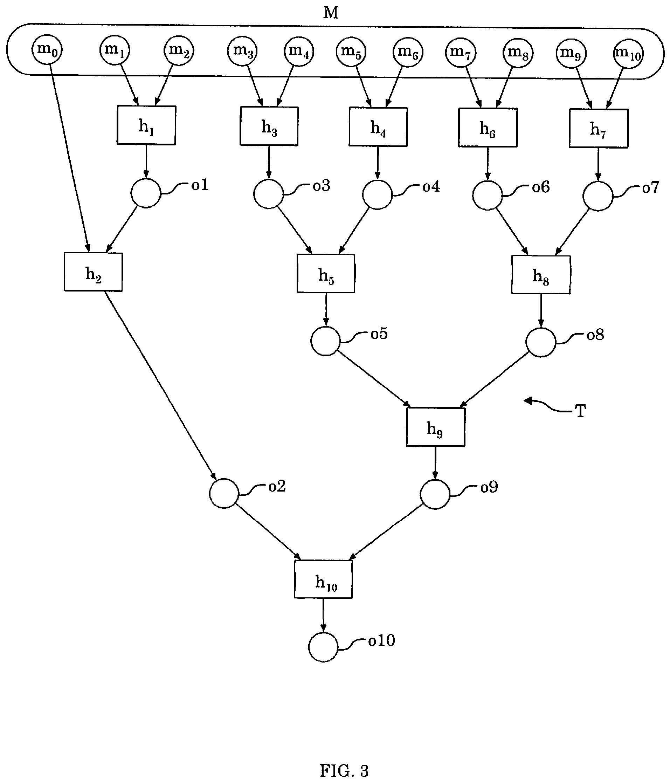

The method of Fig. 2 is described in the following with reference to Fig. 3 illustrating an embodiment of a tree T of first hash functions h₁ - h₁₀ representing a hash function family of second hash functions for authenticating a message M. The message M has a plurality of message parts m₀ - m₁₀. Without loss of generality, the message M of Fig. 3 has eleven message parts m₀ - m₁₀.

In particular, the authentication scheme executed by the method of Fig. 2 is information-theoretically secure. In particular, the authentication scheme is the authentication scheme of Carter and Wegman.

The method of Fig. 2 includes the following steps 201 and 202. In step 201, the message M having said plurality of message parts m₀ - m₁₀ is authenticated using the tree T (see Fig. 3) of first hash functions h₁ - h₁₀ representing a hash function family of second hash functions, i.e. a hash-value is calculated for the message M. The second hash functions of the hash function family are universal hash functions, for example.

The first hash functions h₁ - h₁₀ of Fig. 3 are identical hash functions and are indexed with the indices 1 - 10. The first hash functions h₁ - h₁₀ use a secret for forming a certain one of the second hash functions of the hash function family. In other words, a particular one of the second hash functions is selected by a certain secret. Using said certain secret, the first hash functions h₁ - h₁₀ constitute said certain one of the second hash functions. In particular, said secret may be provided to the sender entity 10 and the receiver entity 20 (see Fig. 5) in advance, i.e. before the authentication scheme according to the method of Fig. 2 including said steps 201 and 202 is executed.

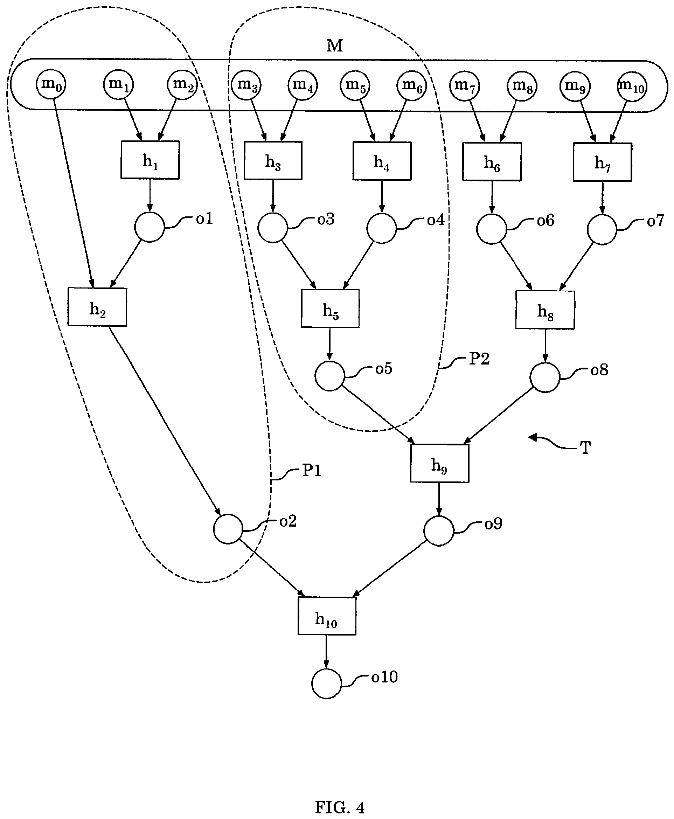

In step 202, the message parts m₀ - m₁₀ are input into the tree T and the first hash functions h₁ - h₁₀ are calculated for providing a hash value as an output o₁₀ of said tree T. Each of the first hash functions h₁ - h₁₀ has a corresponding output o₁ - o₁₀. The output o₁₀ of the very last hash function h₁₀ corresponds to the output of the tree T and therefore represents the hash value which may be part of the authentication data for authenticating said message M. In step 202, in at least one of the first hash functions h₁ - h₁₀, one of the message parts m₀ - m₁₀ and an output o₁ - o₉ of one of the other first hash functions h₁ - h₉ are input. Moreover, in step 202, a tree part P1, P2 including at least two first hash functions of the tree T may completely be calculated before other tree parts of the tree T are calculated (see Fig. 4, for example.)

As mentioned above, in the example of Fig. 3, the identical first hash functions h are indexed with 1 to 10, resulting in h₁ - h₁₀. The indexed first hash functions h₁ - h₁₀ are executed in the order of their indexes, starting with h₁. The message parts m₀ - m₁₀ of the message M may be processed sequentially. In this regard, only data for one path of the first hash functions may be stored. Each of the paths begins with h₁₀ and ends with a first hash function of the top level, in the present example with h₁, h₃, h₄, h₆ or h₇. For example, one path is h₁₀ - h₉- h₈ - h₇. For each first hash function in such a path, never more than the left input has to be stored locally, for example in a RAM or in a cache for executing said first hash functions. In the example of the path h₁₀ - h₉ - h₈ - h₇, these are: m₉, m₁₀, the output o₆ of h₆, the output o₅ of h₅ and the output o₂ of h₂. Thus, only the logarithm of the data of the message needs to be stored locally. At the beginning, the path is h₁₀ - h₂ - h₁ is used and is moved step by step to the right.

Furthermore, Fig. 4 depicts the embodiment of the tree T of Fig. 3 illustrating different tree parts P₁ and P₂ in the tree T. Fig. 4 shows a first tree part P₁ including the first hash functions h₁ and h₂. Further, Fig. 4 shows a second tree part P₂ including the first hash functions h₃, h₄ and h₅. The first tree part P₁ may be completely calculated before the second tree part P₂ is calculated. In general, a tree part including at least two first hash functions of the tree T may completely be calculated before other tree parts of the tree T are calculated. In particular, said first hash functions h₁ - h₁₀ of the tree T may be calculated in a certain order, the certain order being defined by a recursive algorithm beginning at the root of the tree T, here h₁₀.

Fig. 5 shows an embodiment of a system 1 including a sender entity 10 and a receiver entity 20 for executing an authentication scheme. The sender entity 10 and the receiver entity 20 are coupled by a network 30, for example the Internet.

Each of the sender entity 10 and the receiver entity 20 comprises an authentication entity 11, 21. Because the authentication entities 11 and 21 are similarly embodied, it is referred only to the authentication entity 11 of the sender entity 10 in the following.

The authentication entity 11 is configured to authenticate a message M (see Fig. 3, for example) having a plurality of message parts m₀ - m₁₀ using a tree T of first hash functions h₁ - h₁₀ representing a hash function family of second hash functions. The authenticating entity 11 includes an inputting entity 12 for inputting the message parts m₀ - m₁₀ into the tree T and a calculating entity 13 for calculating the first hash functions h₁ - h₁₀ for providing a hash value as an output o₁₀ of said tree T. The inputting entity 12 of the sender entity 10 is configured to input, in at least one of the first hash functions h₁ - h₁₀, one of the message parts m₀ - m₁₀ and an output h₁ - h₉ of one of the other first hash functions h₁ - h₉.

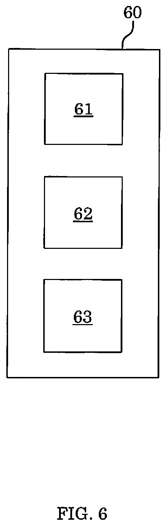

Moreover, in Fig. 6, an embodiment of a device 60 for authentication of a message M (see Fig. 3) having a plurality of message parts m₀ - m₁₀ is depicted. The device 60 of Fig. 6 includes a first unit 61, a second unit 62 and a third unit 63.

The first unit 61 constitutes a tree T of first hash functions h₁ - h₁₀ representing a hash function family of second hash functions (see Fig. 3).

The second unit 62 is configured to input the message parts m₀ - m₁₀ into the tree T. In this regard, the second unit 62 is configured to input, in at least one of the first hash functions h₁ - h₁₀, one of the message parts m₀ - m₁₀ and an output o₁ - o₉ of one of the other first hash functions h₁ - h₉.

The third unit 63 is configured to calculate the first hash functions h₁ - h₁₀ for providing a hash value as an output o₁₀ of said tree T. In this regard, the third unit 63 may be configured to completely calculate a tree part P1, P2 including at least two first hash functions h₁-h₁₀ of the tree T before other tree parts of the tree T are calculated.

While the present invention has been described with reference to certain embodiments, it will be understood by those skilled in the art that various changes may be made and equivalents may be substituted without departing from the scope of the present invention. In addition, many modifications may be made to adapt a particular situation to the teachings of the present invention without departing from its scope. Therefore, it is intended that the present invention is not limited to the particular embodiments disclosed, but that the present invention will include all embodiments falling within the scope of the appended claims.

### REFERENCE NUMERALS

- 1: system
- 10: sender entity
- 11: authenticating entity
- 12: inputting entity
- 13: calculating entity
- 20: receiver entity
- 21: authenticating entity
- 22: inputting entity
- 23: calculating entity
- 30: network
- 60: device
- 61: first unit
- 62: second unit
- 63: third unit
- 201, 202: method steps
- M: message
- m₀ - m₁₀: message parts
- h: hash function
- h₁: hash function
- h₂: hash function
- h₃: hash function
- h₄: hash function
- h₅: hash function
- h₆: hash function
- h₇: hash function
- h₈: hash function
- h₉: hash function
- h₁₀: hash function
- o₁: output of hash function h₁
- O₂: output of hash function h₂
- O₃: output of hash function h₃
- O₄: output of hash function h₄
- O₅: output of hash function h₅
- O₆: output of hash function h₆
- O₇: output of hash function h₇
- O₈: output of hash function h₈
- O₉: output of hash function h₉
- O₁₀: output of hash function h₁₀
- T: tree of hash functions
- P₁: tree part
- P₂: tree part

### REFERENCES

[1] J. Lawrence Carter and Mark N. Wegman, Universal Classes of Hash Functions, Journal of Computer and System Sciences 18, Nr. 2, p. 143-154, April 1979
[2] Mark N. Wegman and J. Lawrence Carter, New Hash Functions and Their Use in Authentication and Set Equality, Journal of Computer and System Sciences 22, p. 265-279, 1981
[3] Aysajan Abidin and Jan-Åke Larsson, Direct Proof of Security of Wegman-Carter Authentication with Partially Known Key, Quantum Information Processing 13, p. 2155-2170, 2013
[4] Brecht Wyseur, White-Box Cryptography, PhD Thesis, Katholieke Universiteit Leuven, March 2009

## Claims

1. A method for executing an authentication scheme with a sender entity (10) and a receiver entity (20), the method comprising:
authenticating (201) a message (M) having a plurality of message parts (m₀-m₁₀) using a tree (T) of first hash functions (h₁-h₁₀) representing a hash function family of second hash functions, wherein the authentication scheme is information-theoretically secure, wherein the second hash functions of the hash function family are universal hash functions, including:
inputting (202) the message parts (m₀-m₁₀) into the tree (T) and calculating the first hash functions (h₁-h₁₀) for providing a hash value as an output (o₁₀) of said tree (T), wherein, in at least one of the first hash functions (h₁-h₁₀), one of the message parts (m₀-m₁₀) and an output (o₁-o₉) of one of the other first hash functions (h₁-h₉) are input, wherein the amount of data to be authenticated at each level in the tree has an even number, assumed that the counting of levels starts at the root of the tree,
wherein the first hash functions (h₁-h₁₀) use a secret for forming a certain one of the second hash functions of the hash function family,
wherein the secret is provided to the sender entity (10) and the receiver entity (20) in advance
wherein a tree part (P1, P2) including at least two first hash functions (h₁, h₂; h₃, h₄, h₅) of the tree (T) is completely calculated before other tree parts of the tree (T) are calculated,
wherein the first hash functions (h₁-h₁₀) of the tree (T) are calculated in a certain order, said certain order being defined by a recursive algorithm beginning at the root of the tree (T).

2. The method of claim 1,
wherein the authentication scheme is the authentication scheme of Carter and Wegman.

3. The method of one of claims 1 to 2,
wherein the sender entity (10) and/or the receiver entity (20) is a tamper resistant hardware, in particular a hardware security module or a smartcard or a secured area in a processor.

4. The method of one of claims 1 to 3,
wherein the secret is protected using white-box cryptography or using fully homomorphic encryption.

5. A computer program comprising a program code for executing the method of one of claims 1 to 4 for executing an authentication scheme with a sender entity (10) and a receiver entity (20) when run on at least one computer.

6. A system (1) including a sender entity (10) and a receiver entity (20) for executing an authentication scheme, wherein each of the sender entity (10) and the receiver entity (20) comprises:
an authenticating entity (11, 21) for authenticating a message (M) having a plurality of message parts (m₀-m₁₀) using a tree (T) of first hash functions (h₁-h₁₀) representing a hash function family of second hash functions, wherein the authenticating entity (11, 21) includes an inputting entity (12, 22) for inputting the message parts (m₀-m₁₀) into the tree (T) and an calculating entity (13, 23) for calculating the first hash functions (h₁-h₁₀) for providing a hash value as an output (o₁₀) of said tree (T), wherein the inputting entity (12, 22) is configured to input, in at least one of the first hash functions (h₁₋h₁₀), one of the message parts (m₀-m₁₀) and an output (o₁-o₉) of one of the other first hash functions (h₁-h₉), wherein the amount of data to be authenticated at each level in the tree has an even number, assumed that the counting of levels starts at the root of the tree, wherein the authentication scheme is information-theoretically secure, wherein the second hash functions of the hash function family are universal hash functions,
wherein the first hash functions (h₁-h₁₀) use a secret for forming a certain one of the second hash functions of the hash function family,
wherein the secret is provided to the sender entity (10) and the receiver entity (20) in advance,
wherein a tree part (P1, P2) including at least two first hash functions (h₁, h₂; h₃, h₄, h₅) of the tree (T) is completely calculated before other tree parts of the tree (T) are calculated,
wherein the first hash functions (h₁-h₁₀) of the tree (T) are calculated in a certain order, said certain order being defined by a recursive algorithm beginning at the root of the tree (T).

7. A device (60) for authentication of a message (M) having a plurality of message parts (m₀-m₁₀), the device (60) comprising:
a first unit (61) constituting a tree (T) of first hash functions (h₁-h₁₀) representing a hash function family of second hash functions,
a second unit (62) for inputting the message parts (m₀-m₁₀) into the tree (T), wherein the second unit (62) is configured to input, in at least one of the first hash functions (h₁-h₁₀), one of the message parts (m₀-m₁₀) and an output (o₁-o₉) of one of the other first hash functions (h₁-h₉), wherein the amount of data to be authenticated at each level in the tree has an even number, assumed that the counting of levels starts at the root of the tree, and
a third unit (63) for calculating the first hash functions (h₁-h₁₀) for providing a hash value as an output (o₁₀) of said tree (T),
wherein the authentication scheme is information-theoretically secure, wherein the second hash functions of the hash function family are universal hash functions,
wherein the first hash functions (h₁-h₁₀) use a secret for forming a certain one of the second hash functions of the hash function family,
wherein the secret is provided to the sender entity (10) and the receiver entity (20) in advance,
wherein a tree part (P1, P2) including at least two first hash functions (h₁, h₂; h₃, h₄, h₅) of the tree (T) is completely calculated before other tree parts of the tree (T) are calculated,
wherein the first hash functions (h₁-h₁₀) of the tree (T) are calculated in a certain order, said certain order being defined by a recursive algorithm beginning at the root of the tree (T).

## Patentansprüche

1. Verfahren zum Ausführen eines Authentifizierungsschemas mit einer Senderentität (10) und einer Empfängerentität (20), wobei das Verfahren Folgendes umfasst:
Authentifizieren (201) einer Nachricht (M) mit mehreren Nachrichtenteilen (m0 - m10) unter Verwendung eines Baums (T) von ersten Hash-Funktionen (h1 - h10), die eine Hash-Funktionsfamilie von zweiten Hash-Funktionen darstellen, wobei das Authentifizierungsschema informationstheoretisch sicher ist, wobei die zweiten Hash-Funktionen der Hash-Funktionsfamilie universelle Hash-Funktionen sind, aufweisend:
Eingeben (202) der Nachrichtenteile (m₀ - m₁₀) in den Baum (T) und Berechnen der ersten Hash-Funktionen (h₁ - h₁₀) um einen Hash-Wert als eine Ausgabe (o₁₀) des Baums (T) bereitzustellen, wobei in mindestens einer der ersten Hash-Funktionen (h₁ - h₁₀) einer der Nachrichtenteile (m₀ - m₁₀) und eine Ausgabe (o₁ - o₉) einer der anderen ersten Hash-Funktionen (h₁ - h₉) eingegeben werden, wobei die Menge an zu authentifizierenden Daten auf jeder Ebene in dem Baum eine gerade Zahl aufweist, vorausgesetzt, dass das Zählen von Ebenen an der Wurzel des Baums beginnt,
wobei die ersten Hash-Funktionen (h₁ - h₁₀) ein Geheimnis zum Bilden einer bestimmten der zweiten Hash-Funktionen der Hash-Funktionsfamilie verwenden,
wobei das Geheimnis der Senderentität (10) und der Empfängerentität (20) im Voraus bereitgestellt wird,
wobei ein Baumteil (P1, P2) mit mindestens zwei ersten Hash-Funktionen (h₁, h₂; h₃, h₄, h₅) des Baums (T) vollständig berechnet wird, bevor andere Baumteile des Baums (T) berechnet werden,
wobei die ersten Hash-Funktionen (h₁ - h₁₀) des Baums (T) in einer bestimmten Reihenfolge berechnet werden, wobei die bestimmte Reihenfolge durch einen rekursiven Algorithmus definiert wird, der an der Wurzel des Baums (T) beginnt.

2. Verfahren nach Anspruch 1,
wobei das Authentifizierungsschema das Authentifizierungsschema von Carter und Wegman ist.

3. Verfahren nach einem der Ansprüche 1 bis 2,
wobei die Senderentität (10) und/oder die Empfängerentität (20) eine manipulationssichere Hardware ist, insbesondere ein Hardware-Sicherheitsmodul oder eine Smartcard oder ein gesicherter Bereich in einem Prozessor.

4. Verfahren nach einem der Ansprüche 1 bis 3,
wobei das Geheimnis unter Verwendung von White-Box Cryptography oder unter Verwendung von vollständig homomorpher Verschlüsselung geschützt wird.

5. Computerprogramm, umfassend einen Programmcode zum Ausführen des Verfahrens nach einem der Ansprüche 1 bis 4 zum Ausführen eines Authentifizierungsschemas mit einer Senderentität (10) und einer Empfängerentität (20), wenn es auf mindestens einem Computer ausgeführt wird.

6. System (1) mit einer Senderentität (10) und einer Empfängerentität (20) zum Ausführen eines Authentifizierungsschemas, wobei die Senderentität (10) und die Empfängerentität (20) jeweils Folgendes aufweisen:
eine Authentifizierungsentität (11, 21) zum Authentifizieren einer Nachricht (M) mit mehreren Nachrichtenteilen (m₀ - m₁₀) unter Verwendung eines Baums (T) von ersten Hash-Funktionen (h₁ - h₁₀), die eine Hash-Funktionsfamilie von zweiten Hash-Funktionen darstellen, wobei die Authentifizierungsentität (11, 21) eine Eingabeentität (12, 22) zum Eingeben der Nachrichtenteile (m₀ - m₁₀) in den Baum (T) und eine Berechnungsentität (13, 23) zum Berechnen der ersten Hash-Funktionen (h₁ - h₁₀) zum Bereitstellen eines Hash-Werts als eine Ausgabe (o₁₀) des Baums (T) aufweist, wobei die Eingabeentität (12, 22) eingerichtet ist, in mindestens einer der ersten Hash-Funktionen (h₁ - h₁₀) einen der Nachrichtenteile (m₀ - m₁₀) und eine Ausgabe (o₁ - o₉) einer der anderen ersten Hash-Funktionen (h₁ - h₉) einzugeben, wobei die Menge an zu authentifizierenden Daten auf jeder Ebene in dem Baum eine gerade Zahl aufweist, vorausgesetzt, dass das Zählen von Ebenen an der Wurzel des Baums beginnt,
wobei das Authentifizierungsschema informationstheoretisch sicher ist, wobei die zweiten Hash-Funktionen der Hash-Funktionsfamilie universelle Hash-Funktionen sind,
wobei die ersten Hash-Funktionen (h₁ - h₁₀) ein Geheimnis zum Bilden einer bestimmten der zweiten Hash-Funktionen der Hash-Funktionsfamilie verwenden,
wobei das Geheimnis der Senderentität (10) und der Empfängerentität (20) im Voraus bereitgestellt wird,
wobei ein Baumteil (P1, P2) mit mindestens zwei ersten Hash-Funktionen (h₁, h₂; h₃, h₄, h₅) des Baums (T) vollständig berechnet wird, bevor andere Baumteile des Baums (T) berechnet werden,
wobei die ersten Hash-Funktionen (h₁ - h₁₀) des Baums (T) in einer bestimmten Reihenfolge berechnet werden, wobei die bestimmte Reihenfolge durch einen rekursiven Algorithmus definiert wird, der an der Wurzel des Baums (T) beginnt.

7. Vorrichtung (60) zum Authentifizieren einer Nachricht (M) mit mehreren Nachrichtenteilen (m₀ - m₁₀), wobei die Vorrichtung (60) Folgendes aufweist:
eine erste Einheit (61), die einen Baum (T) von ersten Hash-Funktionen (h₁ - h₁₀) bildet, die eine Hash-Funktionsfamilie von zweiten Hash-Funktionen darstellen,
eine zweite Einheit (62) zum Eingeben der Nachrichtenteile (m₀ - m₁₀) in den Baum (T), wobei die zweite Einheit (62) eingerichtet ist, in mindestens einer der ersten Hash-Funktionen (h₁ - h₁₀) einen der Nachrichtenteile (m₀ - m₁₀) und eine Ausgabe (o₁ - o₉) einer der anderen ersten Hash-Funktionen (h₁ - h₉) einzugeben, wobei die Menge an zu authentifizierenden Daten auf jeder Ebene in dem Baum eine gerade Zahl aufweist, vorausgesetzt, dass das Zählen von Ebenen an der Wurzel des Baums beginnt, und
eine dritte Einheit (63) zum Berechnen der ersten Hash-Funktionen (h₁ - h₁₀) zum Bereitstellen eines Hash-Werts als eine Ausgabe (o₁₀) des Baums (T), wobei das Authentifizierungsschema informationstheoretisch sicher ist, wobei die zweiten Hash-Funktionen der Hash-Funktionsfamilie universelle Hash-Funktionen sind,
wobei die ersten Hash-Funktionen (h₁ - h₁₀) ein Geheimnis zum Bilden einer bestimmten der zweiten Hash-Funktionen der Hash-Funktionsfamilie verwenden,
wobei das Geheimnis der Senderentität (10) und der Empfängerentität (20) im Voraus bereitgestellt wird,
wobei ein Baumteil (P1, P2) mit mindestens zwei ersten Hash-Funktionen (h₁, h₂; h₃, h₄, h₅) des Baums (T) vollständig berechnet wird, bevor andere Baumteile des Baums (T) berechnet werden,
wobei die ersten Hash-Funktionen (h₁ - h₁₀) des Baums (T) in einer bestimmten Reihenfolge berechnet werden, wobei die bestimmte Reihenfolge durch einen rekursiven Algorithmus definiert wird, der an der Wurzel des Baums (T) beginnt.

## Revendications

1. Procédé d'exécution d'un schéma d'authentification avec une entité émettrice (10) et une entité réceptrice (20), le procédé comprenant :
l'authentification (201) d'un message (M) ayant une pluralité de parties de message (m₀-m₁₀) en utilisant un arbre (T) de premières fonctions de hachage (h₁-h₁₀) représentant une famille de fonctions de hachage de secondes fonctions de hachage, dans lequel le schéma d'authentification est théoriquement sécurisé en termes d'informations, dans lequel les secondes fonctions de hachage de la famille de fonctions de hachage sont des fonctions de hachage universelles, incluant :
l'entrée (202) des parties de message (m₀-m₁₀) dans l'arbre (T) et le calcul des premières fonctions de hachage (h₁-h₁₀) pour fournir une valeur de hachage en tant que sortie (o₁₀) dudit arbre (T), dans lequel, dans au moins l'une des premières fonctions de hachage (h₁-h₁₀), l'une des parties de message (m₀-m₁₀) et une sortie (o₁-o₉) de l'une des autres premières fonctions de hachage (h₁-h₉) sont entrées, dans lequel la quantité de données à authentifier à chaque niveau dans l'arbre a un nombre pair, en supposant que le comptage de niveaux commence à la racine de l'arbre,
dans lequel les premières fonctions de hachage (h₁-h₁₀) utilisent un secret pour former une certaine des secondes fonctions de hachage de la famille de fonctions de hachage,
dans lequel le secret est fourni à l'avance à l'entité émettrice (10) et à l'entité réceptrice (20),
dans lequel une partie d'arbre (P1, P2) incluant au moins deux premières fonctions de hachage (h₁, h₂ ; h₃, h₄, h₅) de l'arbre (T) est complètement calculée avant que d'autres parties d'arbre de l'arbre (T) ne soient calculées,
dans lequel les premières fonctions de hachage (h₁-h₁₀) de l'arbre (T) sont calculées dans un certain ordre, ledit certain ordre étant défini par un algorithme récursif commençant à la racine de l'arbre (T).

2. Procédé selon la revendication 1,
dans lequel le schéma d'authentification est le schéma d'authentification de Carter et Wegman.

3. Procédé selon l'une des revendications 1 à 2,
dans lequel l'entité émettrice (10) et/ou l'entité réceptrice (20) est un matériel inviolable, en particulier un module de sécurité de matériel ou une carte à puce ou une zone sécurisée dans un processeur.

4. Procédé selon l'une des revendications 1 à 3,
dans lequel le secret est protégé en utilisant une cryptographie en boîte blanche ou en utilisant un cryptage entièrement homomorphe.

5. Programme informatique comprenant un code de programme pour exécuter le procédé selon l'une des revendications 1 à 4 pour exécuter un schéma d'authentification avec une entité émettrice (10) et une entité réceptrice (20) lorsqu'il est exécuté sur au moins un ordinateur.

6. Système (1) comprenant une entité émettrice (10) et une entité réceptrice (20) pour exécuter un schéma d'authentification, dans lequel chacune de l'entité émettrice (10) et de l'entité réceptrice (20) comprend :
une entité d'authentification (11, 21) pour authentifier un message (M) ayant une pluralité de parties de message (mₒ-m₁₀) en utilisant un arbre (T) de premières fonctions de hachage (h₁-h₁₀) représentant une famille de fonctions de hachage de secondes fonctions de hachage, dans lequel l'entité d'authentification (11, 21) comprend une entité d'entrée (12, 22) pour entrer les parties de message (m₀-m₁₀) dans l'arbre (T) et une entité de calcul (13, 23) pour calculer les premières fonctions de hachage (h₁-h₁₀) pour fournir une valeur de hachage en tant que sortie (o₁₀) dudit arbre (T), dans lequel l'entité d'entrée (12, 22) est configurée pour entrer, dans au moins l'une des premières fonctions de hachage (h1-h₁₀), l'une des parties de message (m₀-m₁₀) et une sortie (o₁-o₉) de l'une des autres premières fonctions de hachage (h₁-h₉), dans lequel la quantité de données à authentifier à chaque niveau dans l'arbre a un nombre pair, en supposant que le comptage de niveaux commence à la racine de l'arbre,
dans lequel le schéma d'authentification est théoriquement sécurisé en termes d'informations, dans lequel les secondes fonctions de hachage de la famille de fonctions de hachage sont des fonctions de hachage universelles,
dans lequel les premières fonctions de hachage (h₁-h₁₀) utilisent un secret pour former une certaine des secondes fonctions de hachage de la famille de fonctions de hachage,
dans lequel le secret est fourni à l'avance à l'entité émettrice (10) et à l'entité réceptrice (20),
dans lequel une partie d'arbre (P1, P2) incluant au moins deux premières fonctions de hachage (h₁, h₂ ; h₃, h₄, h₅) de l'arbre (T) est complètement calculée avant que d'autres parties d'arbre de l'arbre (T) ne soient calculées,
dans lequel les premières fonctions de hachage (h₁-h₁₀) de l'arbre (T) sont calculées dans un certain ordre, ledit certain ordre étant défini par un algorithme récursif commençant à la racine de l'arbre (T).

7. Dispositif (60) d'authentification d'un message (M) ayant une pluralité de parties de message (m₀-m₁₀), le dispositif (60) comprenant :
une première unité (61) constituant un arbre (T) de premières fonctions de hachage (h₁-h₁₀) représentant une famille de fonctions de hachage de secondes fonctions de hachage,
une deuxième unité (62) pour entrer les parties de message (m₀-m₁₀) dans l'arbre (T), dans lequel la deuxième unité (62) est configurée pour entrer, dans au moins l'une des premières fonctions de hachage (h₁-h₁₀), l'une des parties de message (m₀-m₁₀) et une sortie (o₁-o₉) de l'une des autres premières fonctions de hachage (h₁-h₉), dans lequel la quantité de données à authentifier à chaque niveau dans l'arbre a un nombre pair, en supposant que le comptage de niveaux commence à la racine de l'arbre, et
une troisième unité (63) pour calculer les premières fonctions de hachage (h₁-h₁₀) pour fournir une valeur de hachage en tant que sortie (o₁₀) dudit arbre (T),
dans lequel le schéma d'authentification est théoriquement sécurisé en termes d'informations, dans lequel les secondes fonctions de hachage de la famille de fonctions de hachage sont des fonctions de hachage universelles,
dans lequel les premières fonctions de hachage (h₁-h₁₀) utilisent un secret pour former une certaine des secondes fonctions de hachage de la famille de fonctions de hachage,
dans lequel le secret est fourni à l'avance à l'entité émettrice (10) et à l'entité réceptrice (20),
dans lequel une partie d'arbre (P1, P2) incluant au moins deux premières fonctions de hachage (h₁, h₂ ; h₃, h₄, h₅) de l'arbre (T) est complètement calculée avant que d'autres parties d'arbre de l'arbre (T) ne soient calculées,
dans lequel les premières fonctions de hachage (h₁-h₁₀) de l'arbre (T) sont calculées dans un certain ordre, ledit certain ordre étant défini par un algorithme récursif commençant à la racine de l'arbre (T).
